# EUROPÄISCHE PATENTSCHRIFT

(11) **EP 2 136 147 B1**
(45) Veröffentlichungstag und Bekanntmachung des Hinweises auf die Patenterteilung: **26.09.2018**
(21) Anmeldenummer: 09007994.8
(22) Anmeldetag: 18.06.2009
(51) Int. Cl.: F24F 11/00, G05D 23/19, B60H 1/00

(54) **Verfahren und Einrichtung zur Regelung der Temperatur, der Feuchtigkeit und des Kohlendioxidanteils der Luft in Räumen**
Method and device for regulating the temperature, humidity and carbon dioxide component of the air in rooms
Procédé et dispositif de réglage de la température, de l'humidité et de la teneur en dioxyde de carbone de l'air dans des pièces

(30) Priorität: 19.06.2008 DE 102008029220
(43) Veröffentlichungstag der Anmeldung: 23.12.2009
(73) Patentinhaber: Müller, Peter, 44287 Dortmund (DE)
(72) Erfinder: Müller, Peter, 44287 Dortmund (DE); Ley, Fank, 44137 Dortmund (DE)
(74) Vertreter: Schneider, Uwe

(56) Entgegenhaltungen:
- WO-A1-96/14542
- DE-A1- 10 122 435
- DE-A1- 19 628 735
- DE-A1- 19 700 964

## Beschreibung

Die Erfindung betrifft ein Verfahren zur Regelung der Temperatur, der Feuchtigkeit und des Kohlendioxidanteils der Luft in Räumen gemäß Oberbegriff des Anspruches 1 sowie eine Einrichtung zur Regelung der Temperatur, der Feuchtigkeit und des Kohlendioxidanteils der Luft in Räumen gemäß Oberbegriff des Anspruches 12.

Die Regelung des Raumklimas in Aufenthaltsbereichen von Menschen ist eine wichtige Aufgabe zur Erhaltung und Verbesserung des Wohlbefindens und der Leistungsfähigkeit dieser Menschen. Die "Behaglichkeit' dient als subjektiver Maßstab von Temperaturempfinden, relativer Luftfeuchtigkeit und empfundener Luftqualität. Die empfundene Raumlufttemperatur ist abhängig vom Standort im Raum, der Oberflächentemperatur der Raumumschließungsflächen, der Lufttemperatur und -bewegung und vom Übertragungssystem, mit dem Wärme eines Heizsystems an die Raumluft übertragen wird sowie von den Außenklimabedingungen. Die Raumluftfeuchte wird bestimmt von der Wasserbeladung, die ebenfalls von den Außenbedingungen geprägt ist und von den Quellen, die Wasserdampf an die Raumluft abgeben. Die Raumluftqualität wird bestimmt durch die Luftinhaltstoffe. Diese sind von Außenquellen beeinflusst. In erheblichen Umfang werden Luftinhaltstoffe aber auch aus Materialien und Prozessen im Raum selbst emittiert. Hauptsächlich trägt der Mensch durch seinen Atem und seine Aktivitäten zur Verschlechterung der Raumluftqualität bei. Im Mittel kann davon ausgegangen werden, dass im Rahmen des Stoffwechsels pro Person und Stunde eine Wärmemenge von 70 - 100 Wh, 35 - 60 g Wasserdampf und 10 - 30 I Kohlendioxid an die Umgebungsluft abgegeben werden. Die Anzahl der Luftinhaltstoffe und ihre gesundheitlichen Auswirkungen, u. a. als Folge ihrer Konzentration in der Raumluft, sind vielfältig und nur aufwändig bestimmbar.

Der CO₂- Konzentrationswert der Raumluft (Anteil des CO₂-Gases an dem Gemisch Luft) kann, da relativ zu anderen Luftinhaltstoffen leicht zugänglich, als Maß zur Bestimmung der Luftqualität in Wohnräumen und allgemein von Aufenthaltsräumen dienen. CO₂ kann in hoher Konzentration ebenfalls unser Wohlbefinden beeinflussen. Die durchschnittliche Außenluftkonzentration beträgt zurzeit 370 ppm (parts per million), was 0,037 Volumenprozent entspricht. Die maximal zugelassene Arbeitsplatzkonzentration von CO₂ beträgt 5000 ppm. Allgemein sollte in Aufenthaltsräumen die CO₂-Konzentration von 1000 ppm nicht überschritten werden. Steigt die Konzentration über diesen Wert, kann sich dies durch Konzentrationsschwierigkeiten, Kopfschmerzen oder anderen Symptomen bemerkbar machen. Behaglichkeit kann also durch die Messgrößen Lufttemperatur, Luftfeuchte und CO₂-Konzentration definiert werden.

Im Februar 2003 ist für den Wohnbau in Deutschland die Energieeinsparungsverordnung (EnEV) in Kraft getreten. Sie erweitert das Regelwerk des Niedrigenergiestandards für Neubauten und unter bestimmten Vorraussetzungen auch für bestehende Wohngebäude. Schon in der zuvor gültigen Wärmeschutzverordnung (WSVO) wurden Anforderungen an den Wärmedurchgang der Umfassungsfläche von Gebäuden sowie an die Lüftungswärmeverluste gesetzlich festgelegt. Zum Zwecke der Energieeinsparung wurde schon damals der Jahresheizwärmebedarf von Neubauten begrenzt. Die EnEV baut verschärft in der aktuellen Version vom Februar 2008 auf diesen Vorgaben auf und fordert hoch wärmegedämmte Gebäude, um Heizenergie zu sparen und Ressourcen zu schonen. Eine Reihe weiterer Verordnungen und Richtlinien, wie die DIN 4108 (Wärmeschutz im Hochbau), die DIN EN 832 (Wärmetechnisches Verhalten von Gebäuden) und die DIN V 4701 Teil 10 (energetische Bewertung heiz- und raumlufttechnischer Anlagen) ermöglichen es Bauherren, immer neuere, noch besser den Wärmeverlust über die Bauteile begrenzende Materialien einzusetzen. Die reduzierten Transmissionswärmeverluste und die verringerten unkontrollierten Lüftungswärmeverluste aufgrund luftdichter Bauweise führen zu einer bedeutsamen Verringerung der Lüftungswärmeverluste und auch zur Reduzierung der Luftwechselraten, also des Luftaustauschs Raumluft gegen Außenluft. In schlecht belüfteten Räumen führt dies zu hygienischen Problemen, zu Schimmelpilzbefall und bis zur Zerstörung der Bausubstanz.

Große Wärmeenergieverluste treten aber auch in modernen und gut isolierten Gebäuden auf, wenn das Lüftungsverhalten der Bewohner zu übermäßig langen Fensteröffnungszeiten führt, Die bedarfsgerechte Gebäudelüftung ist in der Lage, die energetischen und hygienischen Probleme in Aufenthaltsräumen zu lösen. Der Verband Deutscher Maschinen- und Anlagenbauer (VDMA) definiert eine bedarfsgeregelte Lüftung wie folgt: "Unter einer bedarfsgeregelten Lüftung ist eine optimierte Betriebsweise zu verstehen, bei der der Luftvolumenstrom während der Nutzungszeit mittels einer Regelung dauernd an den Bedarf angepasst wird. Berücksichtigt werden hierbei die Aspekte Raumluftqualität und thermische Behaglichkeit". Dabei sollen Sensoren die einzelnen Raumluftparameter als Regelgröße erfassen. Über eine geeignete Regelstrategie können dann Aktoren (Stellglieder) einen bauphysikalisch und raumhygienisch erwünschten Raumluftzustand gewährleisten. Lösungen für die Raumbelüftung (die Aktoren) sind bereits am Markt erhältlich, zum Beispiel als zentrale oder dezentrale Lüftungskonzepte und in Kombination mit Wärmerückgewinnungsmethoden. Die unzureichende Information der Öffentlichkeit, von Architekten, Planern und Handwerkern behindern zurzeit noch die rasche Ausbreitung dieser Techniken im Markt. Verstärkt wird diese Problematik durch die Tatsache, dass bisher keine geeigneten Sensoren zur Erfassung der Luftqualität in Büro- und Wohnräumen verfügbar sind und bisher eingesetzte kombinierte Regelsysteme der anderen Raumparameter als teuer und kompliziert eingeschätzt werden. Außerdem sind keine Konzepte bekannt, die unabhängig von der Außenlufttemperatur die Innenraumparameter regeln. Die Verringerung der Wärmeverluste der energetischen Prozesse im Innern durch innere Wärmequellen und solare Einstrahlungen durch Fenster erlangen dabei eine immer größere Bedeutung.

Sämtliche bekannten Regelungen der Raumparameter von Heizungs- und Lüftungsanlagen im Bereich der Haustechnik verwenden als maßgebliche Ausgangsgröße der jeweiligen Regelstrategie die Außentemperatur. Diese hat in den modernen, hochwärmegedämmten und gegen hohe Lüftungswärmeverluste geschützten Gebäuden nur noch minimalen Einfluss auf die für die Herstellung behaglicher Raumluftzustände erforderlichen Stellgrößen. Innere Wärmelasten und solare Wärmeeinstrahlungen beeinflussen die Raumtemperatur in je größerem Umfang, je geringer die Wärmeverluste eines Raumes beziehungsweise eines Gebäudes sind. Raumluftfeuchten werden in nicht klimatisierten Gebäuden nicht geregelt. Objekte, wie zum Beispiel Passivhäuser haben aufgrund der kontinuierlichen, aus bauphysikalischen, energietechnischen und gesundheitlichen Gründen praktizierten Lüftung wegen der in der Heizperiode niedrigen absoluten Wasserbeladung der Außenluft das Problem eines sich zum Teil außerhalb der Behaglichkeitsgrenzen einstellenden, trockenen Raumluftzustands nach Erwärmung der Außenluft. Gebäude ohne Lüftung kennen diesen Effekt zwar auch, dort wird jedoch durch gezieltes "Nichtlüften" bei tiefen Außentemperaturen diesem Effekt entgegengewirkt. Wohnungslüftung ist aus gesundheitlichen Gründen unverzichtbar. Die bedarfsgerechte Regelung der zuzuführenden Frischluftmengen wird zurzeit noch aufgrund des Fehlens eines preiswerten und effizienten Sensors nicht angewandt.
Aus der DE 199 13 848 A1 ist ein Klimatisierungsverfahren für die Klimatisierung von Fahrzeugen und insbesondere Flugzeugen bekannt, das die CO₂-Konzentration als zusätzlich Regelgröße mit einbezieht und als eine wesentliche Steuergröße für die Regelung anderer das Klima in dem Fahrzeug bedingender Parameter ansieht. Über eine genauere Ausgestaltung dieser Regelung der CO₂- Konzentration sowie die Abhängigkeiten mit anderen Regelparametern kann dieser Entgegenhaltung allerdings nichts entnommen werden.

Aus der WO-A-9614542 ist eine kaskadierte Anordnung bekannt, die die Merkmale der Oberbegriffe der Ansprüche 1 und 12 offenbart. Aufgabe der vorliegenden Erfindung ist es daher, mit einem einheitlichen Regelungskonzept nicht nur die Temperatur, sondern auch die relative Luftfeuchtigkeit und die CO₂-Konzentration der Raumluft zu regeln, wobei zu beachten ist, dass diese Größen sich gegenseitig in erheblichem Maß beeinflussen.
Die Lösung der erfindungsgemäßen Aufgabe ergibt sich hinsichtlich des Verfahrens aus den kennzeichnenden Merkmalen des Anspruches 1 und hinsichtlich der Einrichtung aus den kennzeichnenden Merkmalen des Anspruches 14 in Zusammenwirken mit den Merkmalen des jeweiligen Oberbegriffes. Weitere vorteilhafte Ausgestaltungen der Erfindung ergeben sich aus den Unteransprüchen.

Die Erfindung geht aus von einem Verfahren zur Regelung der Temperatur, der Feuchtigkeit und des Kohlendioxidanteils der Raumluft eines Raumes unter Nutzung eines Lüftungsgerätes, mit dem die Lufttemperatur, die Luftfeuchtigkeit und der Kohlendioxidanteil der Raumluft jeweils unabhängig voneinander eingestellt werden können. Ein derartiges gattungsgemäßes Verfahren wird dadurch weiter entwickelt, dass ein innerer Mehrgrößenregler die relative Luftfeuchtigkeit und die Lufttemperatur am Ausgang eines Lüftungsgerätes regelt, wobei für den inneren Mehrgrößenregler aus der Temperatur und der relativen Luftfeuchtigkeit am Ausgang des Lüftungsgerätes die absolute Luftfeuchtigkeit am Ausgang des Lüftungsgerätes berechnet und dem inneren Mehrgrößenregler neben der Temperatur am Ausgang des Lüftungsgerätes als Istwert wieder aufgegeben wird, ein dem inneren Mehrgrößenregler überlagerter äußerer Mehrgrößenregler die relative Luftfeuchtigkeit und die Lufttemperatur der Raumluft des zu regelnden Raumes regelt, wobei für den äußeren Mehrgrößenregler aus der Temperatur und der relativen Luftfeuchtigkeit des zu regelnden Raumes die absolute Luftfeuchtigkeit der Raumluft berechnet und dem äußeren Mehrgrößenregler neben der Temperatur des zu regelnden Raumes als Istwert wieder aufgegeben wird, und ein unabhängig von dem ersten und dem zweiten Mehrgrößenregler arbeitender weiterer Regler den Kohlendioxidanteil der Raumluft über das Lüftungsgerät direkt oder über eine unterlagerte Luftvolumenstromregelung einstellt.

Die erfindungsgemäße Regelungsstruktur zeigt eine kaskadierte Anwendung von vorzugsweise adaptiv ausgelegten Mehrgrößenreglern und kann vorrangig in Gebäuden mit niedrigen Wärmeverlusten, die mit einer Lüftungsanlage mit Wärmerückgewinnung ausgestattet sind, zum Einsatz kommen. Hierbei wird für den inneren Regelkreis z.B. am Austritt des Einblasrohres eines Lüftungsgerätes, das einen Raum klimatisiert, eine Messung von Temperatur, relativer Luftfeuchtigkeit und Luftvolumen pro Zeiteinheit durchgeführt. Aufgrund der Abhängigkeiten von relativer Luftfeuchtigkeit und Temperatur wird aus diesen Messwerten die absolute Luftfeuchtigkeit berechnet und dem inneren Mehrgrößenregler neben der gemessenen Temperatur als Istwert für die zweite Regelgröße wieder aufgegeben. Der äußere Regelkreis dieser Kaskadenstruktur beinhaltet zwei weitere Regler. Für die Regelung der Raumtemperatur und der relativen Luftfeuchtigkeit des Raumes kommt auch hier ein vorzugsweise modelladaptiver Mehrgrößenregler zum Einsatz, der die Luftfeuchtigkeit des Raumes auf der Basis der absoluten Luftfeuchtigkeit regelt. Die Sollwertberechnung der absoluten Luftfeuchtigkeit erfolgt auch hier aus der gewünschten Raumtemperatur und der gewünschten relativen Luftfeuchtigkeit des Raumes. In schon für den inneren Regelkreis beschriebener Weise wird auch für diesen äußeren Regelkreis die Regelgröße absolute Luftfeuchtigkeit des Raumes aus der tatsächlichen Raumlufttemperatur und der tatsächlichen relativen Feuchtigkeit der Raumluft berechnet und dem äußeren Mehrgrößenregler als Istwert aufgeschaltet. Die Stellgrößen des äußeren Mehrgrößenreglers können dabei die Sollwerte hinsichtlich der Temperatur und der absoluten Wasserbeladung des inneren Mehrgrößenreglers darstellen. Vorzugsweise bei Überschreiten eines bestimmten Grenzwertes der CO₂-Konzentration der Raumluft tritt ein weiterer modelladaptiver Regler in Aktion, der über die Veränderung des Luftdurchsatzes die Reduktion dieser CO₂-Konzentration in der Raumluft beeinflusst. Wird jedoch dieser Grenzwert nicht überschritten, so wird z.B. ein definierter Mindestluftvolumenstrom eingehalten. Für Gebäude- und Hausbesitzer könnte eine erfindungemäß geregelte Lüftung gestützt mit Erfassung der Raumluftqualität neben gesteigerter Behaglichkeit und größerem Komfort auch finanzielle Vorteile bringen. Künftig könnten bedarfsgerechte Lüftungskonzepte in die Energiebilanz des Niedrigenergiestandards mit einbezogen werden. Die bessere Energiebilanz wird zu Betriebskosteneinsparungen und zur Verringerung der CO₂-Emissionen aus den Raumluftparametern beitragen.

Ein adaptives Verhalten der Mehrgrößenregler kann vorteilhaft sein, da die erfindungsgemäße Regelung in wärmetechnisch völlig unterschiedlichen Räumen zum Einsatz kommen kann und jahreszeitliche und klimatische Veränderungen ebenfalls zu Buche schlagen, die sich in zeitvarianten Parametern der betrachteten Regelstrecke niederschlagen. Das Gesamtsystem wird geregelt, indem adaptiv die von einander abhängigen Größen Sollwerte Raumtemperatur, Raumluftfeuchte und CO₂-Konzentration der Raumluft über die in kurzzeitigen Intervallen gemessenen Größen Zuluft-/Raumtemperatur, Zuluftfeuchte und Luftvolumenstrom beeinflusst werden. Hierzu können in weiterer Ausgestaltung die modelladaptiven Regler ein Parallelmodell verwenden, das das Verhalten des geschlossenen Regelkreises beschreibt, wobei der Regler die Abweichung zwischen Parallelmodell und zu regelnder Regelgröße minimiert. Auch ist es denkbar, dass ein der Regelstrecke parallel geschaltetes Korrekturnetzwerk mit differenzierende Eigenschaften auftretendes nichtminimalphasiges Verhalten der Regelstrecke kompensiert. Zusätzlich kann ein Vorfilter das Führungsverhalten des modelladaptiven Reglers ohne Beeinflussung des Störverhaltens verändern. Adaptive Regler lernen durch die Reaktion der Regelstrecke auf Stellgrößen dazu. Sie verändern ständig ihre Reglerparameter, wobei sie bestrebt sind, sich optimal auf die Regelstrecke anzupassen. Es ist lediglich notwendig, den Regler vor dem Start mit bestimmten Vorkenntnissen, wie z.B. Verstärkung der Regelstrecke und Lerngeschwindigkeit zu versorgen. Dadurch ist es möglich, einen Regler zu verwenden, ohne dass man die Regelstrecke sehr genau kennt oder weiß, wie sich die Regelstrecke verändern kann. Im Bereich Heizen, Klima, Lüften von Gebäuden ist es der Fall, dass die Regelstrecke (hier: das Gebäude) nur aufwändig beschreibbar ist. Ändern sich doch ständig die Anzahl, Tätigkeit und Anforderungen von Menschen innerhalb von Gebäuden genau so wie äußere Gegebenheiten. Die drei Regelgrößen Temperatur, Luftvolumenstrom und relative Feuchte der Luft sind zudem direkt voneinander abhängig und beeinflussen sich gegenseitig, was das Ausregeln dieser Größen zusätzlich erschwert. Dabei muss die Raumluftqualität möglichst dem Bedarf entsprechend gehalten werden, um den nötigen Komfort für die Bewohner zu gewährleisten. Modelladaptive Regler gehen von einem vorgebbaren Parallelmodell aus, über das das Verhalten des geschlossenen Regelkreises definiert werden kann. Der Adaptionsprozess versucht dabei den Regler so einzustellen, dass die Abweichung e zwischen Parallelmodell und Regelgröße minimiert wird.

Falls sich bei einem Lüftungsgerät der Luftvolumenstrom nicht vorgeben lässt, ist eine unterlagerte Luftvolumenstromregelung denkbar, die einen Standard-PIDT1-Regler beinhalten kann. Derartige Regler sind Standard-Baugruppen und in ihrem Verhalten stabil und einfach zu konfigurieren. Ein derartiger unterlagerter Regler kann derart konfiguriert werden, dass bei Unterschreitung des Grenzwertes der Regelung für den Kohlendioxidanteil in der Raumluft dem Raum ein vorgebbarer Mindestvolumenstrom von Außenluft, vorzugsweise einem Mindestvolumenstrom für einen 0,2-fachen mechanischen Mindestluftwechsel zugeführt wird. Damit ist immer sicher gewährleistet, dass ein entsprechender Luftaustausch erfolgt, so dass sich andere Schadstoffe oder andere Stoffe als CO₂, die das Raumklima negativ beeinflussen, nicht in der Raumluft übermäßig anreichern können.

Weiterhin ist es denkbar, dass die Adaption der adaptiven Regler abgeschaltet wird, wenn die Veränderungen der Regelgrößen vorgebbare Grenzen unterschreiten. Adaptive Regler können sich nur dann adaptieren, wenn im System genügend Signalbewegung vorhanden ist. Wird hier eine Grenze unterschritten, weil die Regelgrößen sich zeitlich nicht mehr ändern, wird die Adaption ausgeschaltet, um ein "Einschlafen" der Adaption zu verhindern.

Von Vorteil ist es, wenn bei erstmaligem Betrieb der adaptiven Regler jedem Regler Vorgabewerte für die Regelparameter zur Verfügung gestellt werden, die einen sicheren Betrieb der Regelung und eine schnelle Adaption der Regler erlauben. Bei einem "Cold-Boot", wie er bei der Inbetriebnahme des Systems zur Anwendung kommt, wird der Regler mit Parametern versorgt, die zwar nicht optimal sind, aber als a priori-Werte einen ersten sicheren Betrieb der Regelung und ein schnelles Lernverhalten der Regler garantieren sowie Instabilitäten vermeiden.

Denkbar ist es auch, dass bei Wiederaufnahme des Regelbetriebs der adaptiven Regler nach einer Abschaltung oder einem Stromausfall jedem Regler Vorgabewerte für die Regelparameter zur Verfügung gestellt werden, die aus vorherigen Betriebszuständen der Regler abgespeichert wurden. Damit nach einem Stromausfall der Lernvorgang der Adaptivregler nicht zwangsläufig von neuem beginnt, werden die aktuellen Reglerparameter in regelmäßigen Zeitabständen in einem nichtflüchtigen Speicher der Reglerimplementierung gespeichert. Bei einem "Warm-Boot" des Systems werden diese Werte als Startwerte in die Regler geladen, um längere Adaptionszeiten zu vermeiden.

Ebenfalls kann in einer weiteren Ausgestaltung die Erfassung von Lufttemperatur, Luftfeuchtigkeit und Kohlendioxidanteil der Raumluft für jeden Raum eines Gebäudes getrennt erfolgen. Durch Einzelraumregelung oder auch durch Zonenbildung können Variationen von Raumnutzungen unterschiedlich behandelt werden. So kann z.B. zwischen Wohn- und Schlafbereichen unterschieden werden. Ebenso geeignet ist das neue Regelkonzept für dezentrale Raumluftkonditionierungskonzepte.

Die Erfindung beschreibt weiterhin eine Regeleinrichtung zur Regelung der Lufttemperatur, der Luftfeuchtigkeit und des Kohlendioxidanteils der Raumluft eines Raumes, aufweisend ein Lüftungsgerät, mit dem die Lufttemperatur, die Luftfeuchtigkeit und der Kohlendioxidanteil von Luft jeweils unabhängig voneinander eingestellt werden kann. Eine derartige Regeleinrichtung, die vorzugsweise zur Durchführung des Regelverfahrens gemäß Anspruch 1 eingesetzt werden kann, wird dadurch weiter gebildet, dass sie eine kaskadierte Regelstruktur aufweist bestehend aus einem inneren Mehrgrößenregler zur Regelung der relativen Luftfeuchtigkeit und der Lufttemperatur am Ausgang eines Lüftungsgerätes, wobei für den inneren Mehrgrößenregler aus der Temperatur und der relativen Luftfeuchtigkeit am Ausgang des Lüftungsgerätes die absolute Luftfeuchtigkeit am Ausgang des Lüftungsgerätes berechnet und dem inneren Mehrgrößenregler neben der Temperatur am Ausgang des Lüftungsgerätes als Istwert wieder aufgegeben wird, einem dem inneren Mehrgrößenregler überlagerten äußeren Mehrgrößenregler zur Regelung der relativen Luftfeuchtigkeit und der Lufttemperatur der Raumluft des zu regelnden Raumes, wobei für den äußeren Mehrgrößenregler aus der Temperatur und der relativen Luftfeuchtigkeit des zu regelnden Raumes die absolute Luftfeuchtigkeit der Raumluft berechnet und dem äußeren Mehrgrößenregler neben der Temperatur des zu regelnden Raumes als Istwert wieder aufgegeben wird, einem unabhängig von dem ersten und dem zweiten Mehrgrößenregler arbeitender weiterer Regler zur Einstellung des Kohlendioxidanteils der Raumluft.

Weiterhin kann das Lüftungsgerät eine regelbare Zusatz-Heizeinrichtung zur Einstellung der Raumtemperatur aufweisen, durch die eine entsprechende Einstellung der Raumtemperatur für den Fall zu niedriger Raumtemperaturen erfolgen kann. Hierzu kann im Lüftungsgerät eine Wärmepumpe, vorzugsweise eine Luft-/Luft-Wärmepumpe und weiter vorzugsweise mit einem frequenzgesteuerten Kompressor vorgesehen werden, die die in der abgesaugten Raumluft vorhandene Wärmeenergie zu einem großen Teil zurück gewinnt und der angesaugten Außenluft wieder zuführt. Damit lassen sich die Wärmeverluste im Sinne einer kontrollierten Raumlüftung mit Wärmerückgewinnung verringern. Ebenfalls ist es denkbar, dass das Lüftungsgerät eine Luftkühlungseinrichtung umfasst, um auch bei höheren Außentemperaturen und damit höheren Temperatur der angesaugten Außenluft eine entsprechende Temperierung der Raumluft zu gewährleisten.

Für den Fall, dass die Wärmepumpe bei Betrieb unterhalb ihrer betriebstechnischen Grenzfrequenz betrieben werden müsste, kann die Wärmepumpe zeitlich intermittierend mit jeweils geringster Leistung betrieben werden. Hierdurch läuft die Wärmepumpe mit einem frequenzgesteuerten Kompressor während der eigentlichen Einschaltzeiten oberhalb ihrer betriebstechnischen Grenzfrequenz und damit im wirtschaftlichen Bereich, während im Stillstand keine unzulässigen Verluste aufgrund unwirtschaftlichen Betriebsverhaltens auftreten können.

Von Vorteil ist es weiter, wenn in dem Lüftungsgerät drehzahlgesteuerte Ventilatoren angeordnet sind, mit denen die Raumluft zugeführt wird. Durch entsprechende Lüftersteuerung kann der Volumenstrom der der Raumluft zugeführten Außenluft bzw. die abgesaugte Raumluft entsprechend optimal geregelt werden.

Denkbar ist es weiterhin, dass in dem Lüftungsgerät eine Luftbefeuchtungseinrichtung, vorzugsweise ein Ultraschallbefeuchter vorgesehen ist. Hierdurch kann der Feuchtegehalt der Raumluft optimal eingestellt und das Komfortempfinden in dem Raum anwesender Personen auch im Falle trockener angesaugter Außenluft erhöht werden. Denkbar ist hierbei, dass die Luftbefeuchtungseinrichtung das zugeführte Wasser über eine Umkehr-Osmose-Anlage filtert. Umgekehrt kann in dem Lüftungsgerät auch eine Luftentfeuchtungseinrichtung vorgesehen sein für den Fall, dass die angesaugte Außenluft besonders hohe Feuchtegrade aufweist.

Von Vorteil ist es weiterhin, wenn an der Auslassöffnung des Lüftungsgerätes und im zu regelnden Raum Sensoren zur Erfassung von Lufttemperatur, relativer Luftfeuchtigkeit und Luftvolumenstrom angeordnet sind. Hierdurch ist erst eine stabile und präzise Regelung der Raumluftparameter möglich.

Eine besonders bevorzugte Ausführungsform der erfindungsgemäßen Einrichtung zeigt die Zeichnung.

Es zeigen:
- Figur 1: - zeigt die Prinzipskizze der erfindungsgemäßen Einrichtung, die selbstlernend und unter Verzicht auf die Berücksichtigung der Außentemperatur die Auswirkung der Veränderung der mittels Temperatursensoren, Feuchtesensoren und CO₂-Sensoren erfassten Größen als Maß zur Regelung der vom Raumnutzer eingestellten Sollwerte verwendet,
- Figur 2: - die grundsätzliche Struktur der verwendeten, modelladaptiven Regler einer Regeleinrichtung gemäß Figur 1.

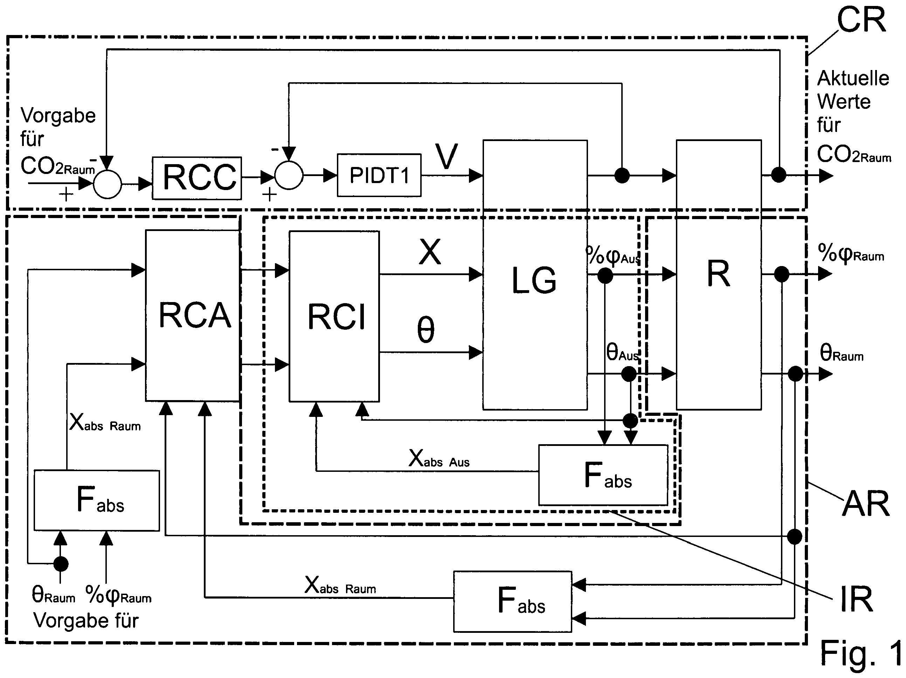

In der Figur 1 ist der prinzipielle Aufbau der erfindungsgemäßen Einrichtung dargestellt, die selbstlernend und unter Verzicht auf die Berücksichtigung der Außentemperatur die Auswirkung der Veränderung der mittels Temperatursensoren, Feuchtesensoren und CO₂-Sensoren erfassten Größen als Maß zur Regelung der vom Raumnutzer eingestellten Sollwerte verwendet.

Verwendet zur Beeinflussung der Temperatur θ, der Feuchte ϕ und des Volumenstroms V der Luft in dem Raum R wird ein Lüftungsgerät LG, das im einfachsten Fall eine voneinander unabhängige Einstellung der Temperatur θ, der Feuchte ϕ und des Volumenstroms V, der aus dem Raum R abgesaugten Luft erlaubt und dem Raum R eine Grundluftmenge zur Verfügung stellt. Geregelt wird das Verhalten des Lüftungsgerätes durch eine kaskadierte Anordnung mehrerer Regler RCI, RCA und RCC. Dabei regelt in einem inneren Regelkreis IR ein innerer Mehrgrößenregler RCI die relative Luftfeuchtigkeit %ϕ_{Aus} und die Lufttemperatur θ_{Aus} am Ausgang des Lüftungsgerätes LG, wobei für den inneren Mehrgrößenregler RCI aus der Temperatur θ_{Aus} und der relativen Luftfeuchtigkeit %ϕ_{Aus} am Ausgang des Lüftungsgerätes LG in einem entsprechenden Baustein F_{abs} die absolute Wasserbeladung X_{abs Aus} am Ausgang des Lüftungsgerätes LG berechnet und dem inneren Mehrgrößenregler RCI neben der Temperatur θ_{Aus} am Ausgang des Lüftungsgerätes LG als Istwert wieder aufgegeben wird. Diesem inneren Regelkreis IR ist ein äußerer Regelkreis AR kaskadiert überlagert, in dem ein äußerer Mehrgrößenregler RCA die relative Luftfeuchtigkeit %ϕ_{Raum} und die Lufttemperatur θ_{Raum} der Raumluft des zu regelnden Raumes R regelt, wobei für den äußeren Mehrgrößenregler aus der Temperatur θ_{Raum} und der relativen Luftfeuchtigkeit %ϕ_{Raum} des zu regelnden Raumes R in einem entsprechenden Baustein F_{abs} die absolute Wasserbeladung der Raumluft X_{absR} berechnet und dem äußeren Mehrgrößenregler RCA neben der Temperatur θ_{Raum} des zu regelnden Raumes R als Istwert aufgegeben wird. Parallel und unabhängig davon arbeitet in einem weiteren Regelkreis CR ein weiterer Regler RCC und stellt mittels eines konventionellen Standard-PIDT1-Reglerbausteins den Kohlendioxidanteil CO_{2Raum} der Raumluft über das Lüftungsgerät LG direkt ein, indem etwa ein regelbarer Ventilator in dem Lüftungsgerät LG entsprechend angesteuert wird und den Volumenstrom V zugeführte Außenluft beeinflusst. Als Vorgabewerte für die Regler werden die Ausgangswerte für die gewünschte Temperatur θ_{Raum}, die gewünschte relative Luftfeuchtigkeit %ϕ_{Raum} und den gewünschten Grenzwert für CO_{2Raum} vorgegeben, wobei die Vorgabewerte für die gewünschte Temperatur θ_{Raum} und die gewünschte relative Luftfeuchtigkeit %ϕ_{Raum} ebenfalls über einen entsprechenden Baustein F_{abs} in die absolute Luftfeuchtigkeit der Raumluft X_{absR} umgerechnet wird.

Dabei erfolgt die Regelung nicht wie herkömmlich durch das Ein- und Ausschalten eines Zweipunktreglers, sondern kontinuierlich. Dieses Regelungskonzept gibt den in der Regel kleinen Leistungen regenerativer Wärmebereitstellungen oder der Wärmerückgewinnung gegenüber dem Zweipunktregelkonzept in der bisherigen Ausgestaltung erhöhten Einsatzraum. Der Wert der relativen Raumluftfeuchte %ϕ_{Raum} wird ebenfalls in seiner Wechselwirkung mit den erstgenannten Raumparametern geregelt und auf dem eingestellten Sollwert gehalten. Im vorliegenden Fall erfolgt die Befeuchtung der Raumluft etwa durch einen Dampfbefeuchter oder einen Ultraschallzerstäuber. Eine Entfeuchtung der Raumluft und deren Kühlung sind problemlos in das Regelkonzept zu integrieren.

Für den Grundaufbau der beschriebenen Heizungsregelung wird ein Lüftungsgerät LG mit Wärmepumpe verwendet, welches einen frequenzgesteuerten Kompressor enthält. Durch den Frequenzumrichter besteht die Möglichkeit, den Kompressor der Wärmepumpe hinsichtlich seiner Leistung zu regeln. Grundsätzlich sind an dieser Stelle jedoch auch andere Heizungskonzepte denkbar. Die Ventilatoren für die Förderung des erforderlichen Luftvolumenstroms V durch das Lüftungsgerät LG werden über eine geeignete Elektronik bezüglich Ihrer Drehzahl gesteuert. Damit wird der Luftvolumenstrom geregelt. Die Luftfeuchte wird z.B. durch eine spezielle, geregelte Ultraschallbefeuchtung der Zuluft zur Verfügung gestellt. Das dem Ultraschallbefeuchter zugeführte Wasser wird etwa über eine Umkehr-Osmose-Anlage gefiltert.

Die von dem Lüftungsgerät LG zur Verfügung gestellte Grundluftmenge dient bei einem z.B. 0,2-fachen mechanischen Mindestluftwechsel zur kontrollierten Abfuhr der Raumluftinhaltstoffe, die personenunabhängig aus dem Raum R abzuführen sind. Bei steigender CO₂-Konzentration wird dieser Volumenstrom V der Luft erhöht. Ausgehend von einem erhöhten mechanischen Luftwechsel wird die Luftmenge des Lüftungsgerätes LG auf den Mindestwert gesenkt, wenn die CO₂-Konzentration sinkt. Die im Lüftungsgerät LG integrierte Luft/Luftwärmepumpe regelt abhängig vom eingestellten Sollwert θ_{Raum} selbsttätig die Zulufttemperatur in Verbindung mit je nach Raumkenngröße erforderlicher Zusatzwärmeversorgung. Der eingestellte Sollwert θ_{Raum} wird auch bei Änderung der Wärmelasten auf dem eingestellten Wert gehalten.

Im oberen Leistungsbereich wird die Wärmepumpe über einen Frequenzumrichter stufenlos in ihrer Wärmeleistung gesteuert. Allerdings ist der Betrieb der Wärmepumpe unterhalb einer bestimmten Frequenz (Leistung) aus betriebstechnischen Gründen nicht möglich. In diesem unteren Leistungsbereich kann die Wärmepumpe gepulst und mit minimaler Leistung betrieben werden. Anstelle der frequenzgesteuerten Wärmepumpe können auch gesteuerte andere Wärmeerzeuger oder gesteuerte Wärmeverteilungseinrichtungen eingesetzt werden.

Aufgrund der Unterschiedlichkeit der Einsatzorte in der Regelung und der unterschiedlichen jahreszeitlichen Betriebsbedingungen ist es notwendig, die Regelung mit ihren Parametern ständig neu anzupassen. Da dieser Vorgang automatisch ablaufen soll, wurde auf bestehende regelungstechnische Verfahren der so genannten adaptiven Regelung zurückgegriffen. In der beschriebenen Klimaregelung gibt es zudem starke Abhängigkeiten der Regelgrößen untereinander. Dies legt die Verwendung von Mehrgrößenreglern RCI und RCA anstelle von Eingrößenregelkreisen nahe.

Die adaptiven Regler RCI, RCA und RCC lernen durch die Reaktion der Regelstrecke auf Stellgrößen dazu. Sie verändern ständig ihre Reglerparameter, wobei sie bestrebt sind, sich optimal auf die Regelstrecke anzupassen. Es ist lediglich notwendig, den Regler vor dem Start mit bestimmten Vorkenntnissen, wie z.B. Verstärkung der Regelstrecke und Lerngeschwindigkeit zu versorgen. Dadurch ist es möglich, einen Regler zu verwenden, ohne dass man die Regelstrecke sehr genau kennt oder weiß, wie sich die Regelstrecke verändern kann. Im Bereich Heizen, Klima, Lüften von Gebäuden ist es der Fall, dass die Regelstrecke (hier: das Gebäude) nur aufwändig beschreibbar ist. Ändern sich doch ständig die Anzahl, Tätigkeit und Anforderungen von Menschen innerhalb von Gebäuden genau so wie äußere Gegebenheiten. Die drei Regelgrößen Temperatur, Luftvolumenstrom und relative Feuchte der Luft sind zudem direkt voneinander abhängig und beeinflussen sich gegenseitig, was das Ausregeln dieser Größen zusätzlich erschwert. Dabei muss die Raumluftqualität möglichst dem Bedarf entsprechend gehalten werden, um den nötigen Komfort für die Bewohner zu gewährleisten.

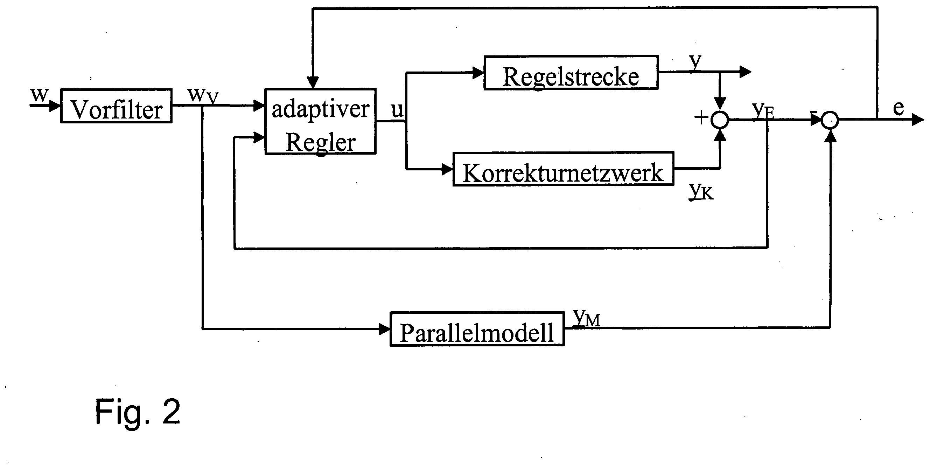

Modelladaptive Regler gehen gemäß Figur 2 dabei von einem vorgebbaren Parallelmodell aus, über das das Verhalten des geschlossenen Regelkreises definiert werden kann. Der Adaptionsprozess versucht dabei den Regler so einzustellen, dass die Abweichung e zwischen Parallelmodell und Regelgröße minimiert wird. Ein Korrekturnetzwerk mit differentiellen Eigenschaften verhindert die Kompensation eventuell auftretenden nichtminimalphasigen Verhaltens der Regelstrecke. Über ein Vorfilter kann zusätzlich das Führungsverhalten ohne Beeinflussung des Störverhaltens verändert werden.

## Patentansprüche

1. Verfahren zur Regelung der Temperatur, der Feuchtigkeit und des Kohlendioxidanteils der Raumluft eines Raumes (R) unter Nutzung eines Lüftungsgerätes (LG), mit dem die Lufttemperatur, die Luftfeuchtigkeit und der Kohlendioxidanteil der Raumluft jeweils unabhängig voneinander eingestellt werden können,
**dadurch gekennzeichnet, dass**
ein innerer Mehrgrößenregler (RCI) die relative Luftfeuchtigkeit und die Lufttemperatur am Ausgang eines Lüftungsgerätes (LG) regelt, wobei für den inneren Mehrgrößenregler (RCI) aus der Temperatur und der relativen Luftfeuchtigkeit am Ausgang des Lüftungsgerätes (LG) die absolute Luftfeuchtigkeit am Ausgang des Lüftungsgerätes (LG) berechnet und dem inneren Mehrgrößenregler (RCI) neben der Temperatur am Ausgang des Lüftungsgerätes (LG) als Istwert aufgegeben wird,
ein dem inneren Mehrgrößenregler (RCI) kaskadiert überlagerter äußerer Mehrgrößenregler (RCA) die relative Luftfeuchtigkeit und die Lufttemperatur der Raumluft des zu regelnden Raumes (R) regelt, wobei für den äußeren Mehrgrößenregler (RCA) aus der Temperatur und der relativen Luftfeuchtigkeit des zu regelnden Raumes die absolute Luftfeuchtigkeit der Raumluft berechnet und dem äußeren Mehrgrößenregler (RCA) neben der Temperatur des zu regelnden Raumes als Istwert aufgegeben wird,
ein unabhängig von dem ersten und dem zweiten Mehrgrößenregler arbeitender weiterer Regler (RCC) den Kohlendioxidanteil der Raumluft über das Lüftungsgerät (LG) direkt einstellt.

2. Verfahren gemäß Anspruch 1, **dadurch gekennzeichnet, dass** erster und zweiter Mehrgrößenregler (RCI, RCA) und/oder dritter Eingrößenregler (RCC) als adaptive Regler, vorzugsweise als modelladaptive Regler betrieben werden.

3. Verfahren gemäß Anspruch 2, **dadurch gekennzeichnet, dass** die modelladaptiven Regler (RCI, RCA, RCC) ein Parallelmodell verwenden, das das Verhalten des geschlossenen Regelkreises beschreibt, wobei der Regler (RCI, RCA, RCC) die Abweichung (e) zwischen Parallelmodell und zu regelnder Regelgröße minimiert.

4. Verfahren gemäß einem der vorstehenden Ansprüche, **dadurch gekennzeichnet, dass** der weitere Regler (RCC) eine unterlagerte Durchflussvolumenstromregelung der Raumluft, vorzugsweise mittels eines Standard-PIDT1-Reglers durchführt.

5. Verfahren gemäß einem der vorstehenden Ansprüche, **dadurch gekennzeichnet, dass** die Stellgrößen des äußeren Mehrgrößenreglers (RCA) die Sollwerte hinsichtlich der Temperatur und der absoluten Wasserbeladung des inneren Mehrgrößenreglers (RCI) ergeben.

6. Verfahren gemäß einem der vorstehenden Ansprüche, **dadurch gekennzeichnet, dass** der Regler (RCC) zur Einstellung des Kohlendioxidanteils der Raumluft erst dann den Kohlendioxidanteil der Raumluft regelt, wenn ein einstellbarer Grenzwert des Kohlendioxidanteils in der Raumluft überschritten wird.

7. Verfahren gemäß Anspruch 6, **dadurch gekennzeichnet, dass** bei Unterschreitung des Grenzwertes der Regelung für den Kohlendioxidanteil in der Raumluft dem Raum (R) ein vorgebbarer Mindestvolumenstrom von Außenluft, vorzugsweise einem Mindestvolumenstrom für einen 0,2-fachen mechanischen Mindestluftwechsel zugeführt wird.

8. Verfahren gemäß einem der vorstehenden Ansprüche, **dadurch gekennzeichnet, dass** die Adaption der adaptiven Regler (RCI, RCA, RCC) solange abgeschaltet wird, wie die Veränderungen der Regelgrößen vorgebbare Grenzen unterschreiten.

9. Verfahren gemäß einem der vorstehenden Ansprüche, **dadurch gekennzeichnet, dass** bei erstmaligem Betrieb der adaptiven Regler (RCI, RCA, RCC) jedem Regler (RCI, RCA, RCC) Vorgabewerte für die Regelparameter zur Verfügung gestellt werden, die einen sicheren Betrieb der Regelung und eine schnelle Adaption der Regler (RCI, RCA, RCC) erlauben.

10. Verfahren gemäß einem der vorstehenden Ansprüche, **dadurch gekennzeichnet, dass** bei Wiederaufnahme des Regelbetriebs der adaptiven Regler (RCI, RCA, RCC) nach einer Abschaltung oder einem Stromausfall jedem Regler (RCI, RCA, RCC) Vorgabewerte für die Regelparameter zur Verfügung gestellt werden, die aus vorherigen Betriebszuständen der Regler (RCI, RCA, RCC) abgespeichert wurden.

11. Verfahren gemäß einem der vorstehenden Ansprüche, **dadurch gekennzeichnet, dass** die Heizkörperpumpe und/oder die Temperaturregelung einer Heizungsanlage direkt beeinflusst werden.

12. Einrichtung zur Regelung der Temperatur, der Feuchtigkeit und des Kohlendioxidanteils der Raumluft eines Raumes (R), aufweisend ein Lüftungsgerät (LG), mit dem die Lufttemperatur, die Luftfeuchtigkeit und der Kohlendioxidanteil von Luft jeweils unabhängig voneinander eingestellt werden kann, insbesondere zur Durchführung des Regelverfahrens nach Anspruch 1,
aufweisend eine kaskadierte Regelstruktur, **dadurch gekennzeichnet, dass** die kaskadierte Regelstruktur aus folgenden Elementen besteht:
einem inneren Mehrgrößenregler (RCI) zur Regelung der relativen Luftfeuchtigkeit und der Lufttemperatur am Ausgang eines Lüftungsgerätes (LG), wobei für den inneren Mehrgrößenregler (RCI) aus der Temperatur und der relativen Luftfeuchtigkeit am Ausgang des Lüftungsgerätes (LG) die absolute Luftfeuchtigkeit am Ausgang des Lüftungsgerätes (LG) berechnet und dem inneren Mehrgrößenregler (RCI) neben der Temperatur am Ausgang des Lüftungsgerätes (LG) als Istwert wieder aufgegeben wird,
einem dem inneren Mehrgrößenregler (RCI) überlagerten äußeren Mehrgrößenregler (RCA) zur Regelung der relativen Luftfeuchtigkeit und der Lufttemperatur der Raumluft des zu regelnden Raumes (R), wobei für den äußeren Mehrgrößenregler (RCA) aus der Temperatur und der relativen Luftfeuchtigkeit des zu regelnden Raumes (R) die absolute Luftfeuchtigkeit der Raumluft berechnet und dem äußeren Mehrgrößenregler (RCA) neben der Temperatur des zu regelnden Raumes (R) als Istwert wieder aufgegeben wird,
einem unabhängig von dem ersten und dem zweiten Mehrgrößenregler (RCI, RCA) arbeitender weiterer Regler (RCC) zur Einstellung des Kohlendioxidanteils der Raumluft.

13. Einrichtung gemäß Anspruch 12, **dadurch gekennzeichnet, dass** erster und weiterer Mehrgrößenregler (RCI, RCA) und/oder dritter Eingrößenregler (RCC) adaptive Regler, vorzugsweise modelladaptive Regler sind.

14. Einrichtung gemäß einem der Ansprüche 12 oder 13, **dadurch gekennzeichnet, dass** das Lüftungsgerät (LG) eine regelbare Zusatz-Heizeinrichtung zur Einstellung der Raumtemperatur aufweist.

15. Einrichtung gemäß einem der Ansprüche 12 bis 14, **dadurch gekennzeichnet, dass** in dem Lüftungsgerät (LG) eine Luftkühlungseinrichtung vorgesehen ist.

16. Einrichtung gemäß einem der Ansprüche 12 bis 15, **dadurch gekennzeichnet, dass** das Lüftungsgerät (LG) eine Wärmepumpe, vorzugsweise mit einem frequenzgesteuerten Kompressor aufweist.

17. Einrichtung gemäß Anspruch 16, **dadurch gekennzeichnet, dass** die Wärmepumpe bei Betrieb unterhalb ihrer betriebstechnischen Grenzfrequenz zeitlich intermittierend mit jeweils geringster Leistung betreibbar ist.

18. Einrichtung gemäß einem der Ansprüche 12 bis 17, **dadurch gekennzeichnet, dass** an der Auslassöffnung des Lüftungsgerätes (LG) Sensoren zur Erfassung von Lufttemperatur, relativer Luftfeuchtigkeit und Luftvolumenstrom angeordnet sind.

19. Einrichtung gemäß einem der Ansprüche 12 bis 18, **dadurch gekennzeichnet, dass** im zu regelnden Raum (R) Sensoren zur Erfassung von Lufttemperatur, relativer Luftfeuchtigkeit und Kohlendioxidanteil der Raumluft angeordnet sind.

20. Einrichtung gemäß einem der Ansprüche 12 bis 19, **dadurch gekennzeichnet, dass** der Regelkreis (RCC) in das Lüftungsgerät (LG) eingebaut oder dem Lüftungsgerät (LG) extern vorgeschaltet ist.

## Claims

1. Method for controlling the temperature, the humidity and the carbon dioxide content of the room air in a room (R) using a ventilation device (LG) with which the air temperature, the air humidity and the carbon dioxide content of the room air can each be adjusted independently of one another,
**characterized in that**
an internal multi-variable controller (RCI) regulates the relative air humidity and the air temperature at the output of a ventilation device (LG), whereby for the internal multi-variable controller (RCI) the absolute air humidity at the output of the ventilation device (LG) is calculated based on the temperature and the relative air humidity at the output of the ventilation unit (LG) and fed to the internal multi-variable controller (RCI) in addition to the temperature at the output of the ventilation unit (LG) as actual value,
an external multi-variable controller (RCA) cascaded over the internal multi-variable controller (RCI) controls the relative air humidity and the air temperature of the room air of the room (R) to be controlled, the absolute air humidity of the room air of the room to be controlled being calculated from the temperature and the relative air humidity for the external multi-variable controller (RCA) and fed as actual value to the external multi-variable controller (RCA) in addition to the temperature of the room to be controlled,
an additional controller (RCC) that operates independently of the first and second multi-variable controllers directly adjusts the carbon dioxide content of the room air via the ventilation unit (LG).

2. Method according to claim 1, **characterized in that** first and second multi-variable controller (RCI, RCA) and/or third single-variable controller (RCC) are operated as adaptive controllers, preferably as model-adaptive controllers.

3. Method according to claim 2, **characterized in that** the model-adaptive controllers (RCI, RCA, RCC) use a parallel model describing the behavior of the closed loop, wherein the controller (RCI, RCA, RCC) minimizes the deviation (e) between the parallel model and the controlled variable to be regulated.

4. Method according to one of the preceding claims, **characterized in that** the further controller (RCC) carries out a cascaded control of the flow rate of the volume flow of the room air, preferably by means of a standard PIDT1 controller.

5. Method according to one of the preceding claims, **characterized in that** the manipulated variables of the external multi-variable controller (RCA) give the setpoints with respect to the temperature and the absolute water load for the internal multi-variable controller (RCI).

6. Method according to one of the preceding claims, **characterized in that** the controller (RCC) for adjusting the carbon dioxide content of the room air only controls the carbon dioxide content of the room air if an adjustable limit value of the carbon dioxide content in the room air is exceeded.

7. Method according to claim 6, **characterized in that** when the limit value of the control for the carbon dioxide content in the room air is not reached, a predeterminable minimum volume flow of outside air, preferably a minimum volume flow for a 0.2-fold mechanical minimum air change, is supplied to the room (R).

8. Method according to one of the preceding claims, **characterized in that** the adaption of the adaptive controllers (RCI, RCA, RCC) is switched off as long as the changes of the controlled variables do not exceed predeterminable limits.

9. Method according to one of the preceding claims, **characterized in that** on initial operation of the adaptive controllers (RCI, RCA, RCC) each controller (RCI, RCA, RCC) is provided with preset values for the control parameters which permit safe operation of the control and rapid adaptation of the controllers (RCI, RCA, RCC).

10. Method according to one of the preceding claims, **characterized in that** when control operation of the adaptive controllers (RCI, RCA, RCC) resumes after a switch-off or a power failure, preset values are made available to each controller (RCI, RCA, RCC) for the control parameters stored from previous operating states of the controllers (RCI, RCA, RCC).

11. Method according to one of the preceding claims, **characterized in that** the radiator pump and/or the temperature control of a heating system are directly influenced.

12. Device for controlling the temperature, the humidity and the carbon dioxide content of the room air of a room (R), comprising a ventilation device (LG) with which the air temperature, the air humidity and the carbon dioxide content of air can each be adjusted independently of one another, in particular for carrying out the control procedure according to claim 1,
comprising a cascaded control structure,
**characterized in that**
the cascaded control structure consists of the following elements:
an internal multi-variable controller (RCI) for controlling the relative air humidity and the air temperature at the output of a ventilation unit (LG), wherein for the internal multi-variable controller (RCI) the absolute air humidity at the output of the ventilation unit (LG) is calculated from the temperature and the relative air humidity at the output of the ventilation unit (LG) and is fed back to the internal multi-variable controller (RCI) in addition to the temperature at the output of the ventilation unit (LG) as actual value,
an external multi-variable controller (RCA) cascaded over the internal multi-variable controller (RCI) for controlling the relative air humidity and the air temperature of the room air of the room (R) to be controlled, the absolute air humidity of the room air being calculated from the temperature and the relative air humidity of the room (R) to be controlled for the external multi-variable controller (RCA) and fed back to the external multi-variable controller (RCA) as actual value in addition to the temperature of the room (R) to be controlled,
an additional controller (RCC) operating independently of the first and second multi-variable controllers (RCI, RCA) for adjusting the carbon dioxide content of the room air.

13. Device according to claim 12, **characterized in that** first and further multi-variable controllers (RCI, RCA) and/or third single-variable controller (RCC) are adaptive controllers, preferably model-adaptive controllers.

14. Device according with one of claims 12 or 13, **characterised in that** the ventilation device (LG) has an adjustable additional heating device for adjusting the room temperature.

15. Device according to one of claims 12 to 14, **characterized in that** an air cooling device is provided in the ventilation device (LG).

16. Device according to one of claims 12 to 15, **characterized in that** the ventilation device (LG) comprises a heat pump, preferably with a frequency-controlled compressor.

17. Device according to claim 16, **characterized in that** the heat pump can be operated in timely intermittent operation below its operational cut-off frequency at the lowest power in each case.

18. Device according with one of claims 12 to 17, **characterized in that** sensors for detecting air temperature, relative air humidity and air volume flow are arranged at the outlet opening of the ventilation device (LG).

19. Device according with one of claims 12 to 18, **characterized in that** sensors are arranged in the room (R) to be controlled for detecting the air temperature, relative air humidity and carbon dioxide content of the room air.

20. Device according with one of claims 12 to 19, **characterized in that** the control circuit (RCC) is built into the ventilation device (LG) or is externally connected upstream of the ventilation device (LG).

## Revendications

1. Procédé de réglage de la température, de l'humidité et de la teneur en dioxyde de carbone de l'air ambiant d'une pièce (R) en utilisant un appareil de ventilation (LG), avec lequel la température de l'air, l'humidité de l'air et la teneur en dioxyde de carbone de l'air ambiant peuvent être réglées indépendamment l'une de l'autre,
**caractérisé en ce que**
un régulateur multivariable interne (RCI) qui règle l'humidité relative de l'air et la température de l'air à la sortie d'un appareil de ventilation (LG), dans lequel l'humidité absolue de l'air à la sortie de l'appareil de ventilation (LG) est calculée pour le régulateur multivariable interne (RCI) à partir de la température et de l'humidité relative de l'air à la sortie de l'appareil de ventilation (LG) et est envoyée au régulateur multivariable interne (RCI) en tant que valeur réelle en plus de la température à la sortie de l'appareil de ventilation (LG),
un régulateur multivariable externe (RCA) superposé en cascade au régulateur multivariable interne (RCI) règle l'humidité relative de l'air et la température de l'air de l'air ambiant de la pièce à régler (R), dans lequel l'humidité absolue de l'air de la pièce est calculée pour le régulateur multivariable externe (RCA) à partir de la température et de l'humidité relative de l'air de la pièce à régler et est envoyée au régulateur multivariable externe (RCA) en tant que valeur réelle en plus de la température de la pièce à régler,
un autre régulateur (RCC) fonctionnant indépendamment du premier et du deuxième régulateur multivariable règle directement la teneur en dioxyde de carbone de l'air ambiant par le biais de l'appareil de ventilation (LG).

2. Procédé selon la revendication 1, **caractérisé en ce que** le premier et le deuxième régulateur multivariable (RCI, RCA) et/ou le troisième régulateur monovariable (RCC) fonctionnent en tant que régulateurs adaptatifs, de préférence en tant que régulateurs adaptatifs à un modèle.

3. Procédé selon la revendication 2, **caractérisé en ce que** les régulateurs adaptatifs à un modèle (RCI, RCA, RCC) utilisent un modèle parallèle, qui décrit le comportement du circuit de régulation fermé, dans lequel le régulateur (RCI, RCA, RCC) minimise l'écart (e) entre le modèle parallèle et la grandeur de réglage à régler.

4. Procédé selon l'une quelconque des revendications précédentes, **caractérisé en ce que** l'autre régulateur (RCC) effectue un réglage de débit volumique secondaire de l'air ambiant, de préférence au moyen d'un régulateur PIDT1 standard.

5. Procédé selon l'une quelconque des revendications précédentes, **caractérisé en ce que** les grandeurs de commande du régulateur multivariable externe (RCA) donnent les valeurs de consigne concernant la température et la teneur en eau absolue du régulateur multivariable interne (RCI).

6. Procédé selon l'une quelconque des revendications précédentes, **caractérisé en ce que** le régulateur (RCC) pour le réglage de la teneur en dioxyde de carbone de l'air ambiant ne règle la teneur en dioxyde de carbone de l'air ambiant que lorsqu'une valeur limite réglable de la teneur en dioxyde de carbone dans l'air ambiant est dépassée.

7. Procédé selon la revendication 6, **caractérisé en ce que** lors du sous-dépassement de la valeur limite du réglage pour la teneur en dioxyde de carbone dans l'air ambiant de la pièce (R), un débit volumique minimum prédéfinissable d'air extérieur, est amené de préférence à un débit volumique minimum pour 0,2 fois le changement d'air minimum.

8. Procédé selon l'une quelconque des revendications précédentes, **caractérisé en ce que** l'adaptation des régulateurs adaptatifs (RCI, RCA, RCC) est désactivée aussi longtemps que les changements des grandeurs réglables sous-dépassent des limites prédéfinissables.

9. Procédé selon l'une quelconque des revendications précédentes, **caractérisé en ce que** lors du premier fonctionnement des régulateurs adaptatifs (RCI, RCA, RCC), des valeurs prédéfinies pour les paramètres de réglage sont mises à la disposition de chaque régulateur (RCI, RCA, RCC), qui permettent un fonctionnement sûr du réglage et une adaptation rapide des régulateurs (RCI, RCA, RCC).

10. Procédé selon l'une quelconque des revendications précédentes, **caractérisé en ce que** lors de la reprise du fonctionnement normal des régulateurs adaptatifs (RCI, RCA, RCC) après une coupure ou une panne de courant, des valeurs prédéfinies pour les paramètres de réglage, qui ont été enregistrées à partir des états de fonctionnement précédents des régulateurs (RCI, RCA, RCC), sont mises à la disposition de chaque régulateur (RCI, RCA, RCC).

11. Procédé selon l'une quelconque des revendications précédentes, **caractérisé en ce que** la pompe de radiateur et/ou le réglage de la température d'une installation de chauffage sont influencés directement.

12. Dispositif de réglage de la température, de l'humidité et de la teneur en dioxyde de carbone de l'air ambiant d'une pièce (R), présentant un appareil de ventilation (LG), avec lequel la température de l'air, l'humidité de l'air et la teneur en dioxyde de carbone de l'air peuvent être réglées indépendamment l'une de l'autre, en particulier pour la réalisation du procédé de réglage selon la revendication 1, présentant une structure de réglage en cascade,
**caractérisé en ce que**
la structure de réglage en cascade se compose des éléments suivants:
un régulateur multivariable interne (RCI) pour le réglage de l'humidité relative de l'air et de la température de l'air à la sortie d'un appareil de ventilation (LG), dans lequel l'humidité absolue de l'air à la sortie de l'appareil de ventilation (LG) est calculée pour le régulateur multivariable interne (RCI) à partir de la température et de l'humidité relative de l'air à la sortie de l'appareil de ventilation (LG) et est envoyée au régulateur multivariable interne (RCI) en tant que valeur réelle en plus de la température à la sortie de l'appareil de ventilation (LG),
un régulateur multivariable externe (RCA) superposé au régulateur multivariable interne (RCI) pour le réglage de l'humidité relative de l'air et de la température de l'air de l'air ambiant de la pièce à régler (R), dans lequel l'humidité absolue de l'air de la pièce est calculée pour le régulateur multivariable externe (RCA) à partir de la température et de l'humidité relative de l'air de la pièce à régler (R) et est envoyée au régulateur multivariable externe (RCA) en tant que valeur réelle en plus de la température de la pièce à régler (R),
un autre régulateur (RCC) fonctionnant indépendamment du premier et du deuxième régulateur multivariable (RCI, RCA) pour le réglage de la teneur en dioxyde de carbone de l'air ambiant.

13. Dispositif selon la revendication 12, **caractérisé en ce que** le premier et un autre régulateur multivariable (RCI, RCA) et/ou le troisième régulateur monovariable (RCC) sont des régulateurs adaptatifs, de préférence des régulateurs adaptatifs à un modèle.

14. Dispositif selon l'une quelconque des revendications 12 ou 13, **caractérisé en ce que** l'appareil de ventilation (LG) présente un dispositif de chauffage supplémentaire réglable pour le réglage de la température ambiante.

15. Dispositif selon l'une quelconque des revendications 12 à 14, **caractérisé en ce qu'**un dispositif de refroidissement d'air est prévu dans l'appareil de ventilation (LG).

16. Dispositif selon l'une quelconque des revendications 12 à 15, **caractérisé en ce que** l'appareil de ventilation (LG) présente une pompe à chaleur, de préférence avec un compresseur commandé par fréquence.

17. Dispositif selon la revendication 16, **caractérisé en ce que** la pompe à chaleur est exploitable en cas de fonctionnement sous sa fréquence limite opérationnelle de manière intermittente dans le temps avec une puissance respectivement la plus faible.

18. Dispositif selon l'une quelconque des revendications 12 à 17, **caractérisé en ce que** des capteurs de détection de la température de l'air, de l'humidité relative de l'air et du débit d'air sont agencés au niveau de l'orifice de sortie de l'appareil de ventilation (LG).

19. Dispositif selon l'une quelconque des revendications 12 à 18, **caractérisé en ce que** des capteurs de détection de la température de l'air, de l'humidité relative de l'air et de la teneur en dioxyde de carbone de l'air ambiant sont agencés dans la pièce à régler (R).

20. Dispositif selon l'une quelconque des revendications 12 à 19, **caractérisé en ce que** le circuit de réglage (RCC) est intégré dans l'appareil de ventilation (LG) ou monté en amont à l'extérieur de l'appareil de ventilation (LG).
